# EUROPÄISCHE PATENTSCHRIFT

(11) **EP 4 038 295 B1**
(45) Veröffentlichungstag und Bekanntmachung des Hinweises auf die Patenterteilung: **27.09.2023**
(21) Anmeldenummer: 20757880.8
(22) Anmeldetag: 14.08.2020
(51) Int. Cl.: F16H 59/10, F16H 63/42

(54) **GETRIEBESYSTEM UND VERFAHREN ZUM BETRIEB EINES SOLCHEN GETRIEBESYSTEMS**
GEARBOX SYSTEM AND METHOD FOR OPERATING SAID TYPE OF GEARBOX SYSTEM
SYSTÈME DE BOÎTE DE VITESSES ET PROCÉDÉ DE FONCTIONNEMENT DUDIT TYPE DE DE BOÎTE DE VITESSES

(30) Priorität: 02.10.2019 DE 102019126639
(43) Veröffentlichungstag der Anmeldung: 10.08.2022
(73) Patentinhaber: Bayerische Motoren Werke Aktiengesellschaft, 80809 München (DE)
(72) Erfinder: PETERS, Stephan, 85591 Vaterstetten (DE); SPRENGART, Benjamin, 85716 Unterschleißheim (DE); WALLA, Gregor, 80995 München (DE)
(86) Internationale Anmeldenummer: PCT/EP2020/072879
(87) Internationale Veröffentlichungsnummer: WO 2021/063583

(56) Entgegenhaltungen:
- WO-A2-03/102449
- DE-A1- 10 206 985
- DE-A1-102007 037 750
- DE-A1-102009 039 113

## Beschreibung

Die Erfindung betrifft ein Getriebesystem für ein Fahrzeug mit einem automatischen Schaltgetriebe, einer Getriebesteuereinrichtung, eingerichtet um das automatische Schaltgetriebe zu steuern, und einem durch einen Benutzer, insbesondere Fahrer, betätigbaren monostabilen Kippschalter, welcher in wenigstens, insbesondere genau, zwei Auslenkrichtungen bewegbar ist und mittels welchem eine Vielzahl an Fahrstufen der Getriebesteuereinrichtung durch den Benutzer anwählbar sind, und einer visuellen Einrichtung, welche ein Schaltschema mit durch den Kippschalter anwählbaren Fahrstufen grafisch darstellt oder darstellen kann.

Das Dokument EP 1 045 172 B1 betrifft ein Kraftfahrzeug mit einem Antriebsmotor und einem automatisch geschalteten Getriebe, insbesondere einem Automatikgetriebe, und mit einem Bedienhebel als Bedienelement. Mit diesem steuert ein Fahrer eine elektrische Getriebesteuereinrichtung an, die abhängig von einer am Wählhebei gewählten Betriebsstellung für das automatisch geschaltete Getriebe und von anderen Betriebsparametern des Kraftfahrzeugs das automatisch geschaltete Getriebe steuert, wobei durch Auslenken des Wählhebels bestimmte Betriebsstellungen des automatisch geschalteten Getriebes ausgewählt werden, und dieser längs mindestens einer Schaltgasse zum Vorwählen von einzelnen Fahrstufen im Automatikbetrieb in wenigstens zwei Auslenkrichtungen bewegbar ist und sich aus den beiden Auslenkrichtungen selbsttätig in immer dieselbe Ausgangslage zurückstellt. Dabei ist jeder Auslenkrichtung des Wählhebels in der Schaltgasse zum Vorwählen von einzelnen Fahrstufen im Automatikbetrieb jeweils dieselbe Fahrstufe des automatisch geschalteten Getriebes zugeordnet, und in mindestens eine Auslenkrichtung des Wählhebels können zwei verschiedene Fahrstufen angewählt werden, indem der Wählhebel zum Auswählen einer ersten Fahrstufe eine erste Strecke bis zu einem ersten Anschlag in die Auslenkrichtung bewegbar ist und der Wählhebel zum Auswählen einer zweiten Fahrstufe eine zweite, größere Strecke bis zu einem zweiten Anschlag in dieselbe Auslenkrichtung bewegbar ist, wobei der erste Anschlag überdrückbar ist.

Das Dokument DE 10 2009 039 113 A1 betrifft eine Schalteinheit für ein insbesondere elektronisch geschaltetes Getriebe eines Kraftfahrzeugs, umfassend ein in mehrere, bestimmten Fahrstufen zugeordnete Stellungen bewegbares Fahrstufenwählelement, das monostabil in einer Grundstellung rastierbar ist.

Das Dokument DE 10 2007 037 750 A1 betrifft einen im Wesentlichen monostabil ausgelegten Wählhebel und kehrt damit nach dem Anwählen der einzelnen Fahrstufen jeweils wieder in seine Ausgangslage zurück. In dieser Ausgangslage wird nach dem Abstellen des Motors eine Wirkverbindung zwischen Motor und Getriebe in jedem Fall unterbrochen. Lediglich in der Fahrstufe "R" verrastet der Wählhebel und bleibt auch dort nach Abstellen des Motors. In dieser Stellung kann der Motor auch neu gestartet werden. Um allerdings losfahren zu können, muss der Fahrer den Wählhebel erst aus der Fahrstufe "R" in die Ausgangslage bewegen und von dort die gewünschte Fahrstufe "D", "M" oder auch "R" anwählen.

Das Dokument DE 102 06 985 A1 betrifft eine "monostabile Schaltung", bei der zwei Schaltgassen vorgesehen sind. "Monostabil" bedeutet hierbei, dass das Schaltelement bzw. der Schalthebel nur eine einzige stabile Stellung hat. In Abhängigkeit vom aktuellen "Betriebszustand" der Schalteinrichtung können durch Auslenken des Schalthebels bestimmte andere Betriebszustände angewählt werden. Der Schalthebel wird hierzu von Hand entweder in der einen oder in der anderen Schaltgasse ausgelenkt und kehrt nach dem Loslassen aus jeder möglichen Auslenkstellung selbsttätig in die stabile Ausgangsstellung zurück.

Das Dokument WO 03/102449 A2 betrifft ein Verfahren zum Anzeigen von unterschiedlichen Schaltzuständen eines Kraftfahrzeuggetriebes eineindeutig zugeordneten Symbolen an wenigstens zwei unterschiedlichen Anzeigepositionen und eine optische Anzeigevorrichtung einer im Kraftfahrzeug angeordneten Wählhebelanordnung mit einem in diesem gelagerten Wählhebel zum Umschalten zwischen unterschiedlichen Schaltzuständen eines Kraftfahrzeuggetriebes.

Mit neuen Fahrzeuggenerationen kommen im Allgemeinen weitere Schaltmodi bei automatischen Schaltgetrieben hinzu, in der Vergangenheit beispielsweise ein Sportmodus, welcher in der Getriebesteuerung als Fahrstufe S hinterlegt ist. Dieser Sportmodus sieht in der Regel Schaltvorgänge schon bei vergleichsweise niedrigen Drehzahlen vor. Solche zusätzlichen Schaltmodi müssen für einen Fahrer begreifbar und schaltbar und in bestehende Schaltoptionen integriert werden.

Es ist eine Aufgabe der Erfindung, ein verbessertes Getriebesystem mit einem automatischen Schaltgetriebe und ein Verfahren zum Betreiben eines solchen Getriebesystems bereitzustellen. Insbesondere ist es eine Aufgabe der Erfindung, eine Bedienung eines Getriebesystems mit einer Vielzahl an Fahrstufen zu vereinfachen.

Diese Aufgabe wird gelöst durch ein Getriebesystem, ein Fahrzeug mit einem solchen Getriebesystem und ein Verfahren zum Betrieb eines solchen Getriebesystems gemäß den unabhängigen Ansprüchen. Vorteilhafte Ausgestaltungen werden in den abhängigen Ansprüchen beansprucht.

Ein erster Aspekt der Erfindung betrifft ein Getriebesystem für ein Fahrzeug, welches ein automatisches Schaltgetriebe aufweist. Eine Getriebesteuereinrichtung dieses Getriebesystems ist vorzugsweise eingerichtet, um das automatische Schaltgetriebe zu steuern. Des Weiteren weist das Getriebe vorzugsweise einen durch einen Benutzer, insbesondere Fahrer, betätigbaren monostabilen Kippschalter, welcher in wenigstens, insbesondere genau, zwei Auslenkrichtungen bewegbar ist und mittels welchem eine Vielzahl an Fahrstufen der Getriebesteuereinrichtung durch den Benutzer anwählbar sind, auf. Eine visuelle Einrichtung des Getriebesystems weist vorzugsweise ein Schaltschema mit durch den Kippschalter anwählbaren Fahrstufen auf, welche in diesem grafisch dargestellt werden oder dargestellt werden können. Zwischen einer ersten und einer zweiten Fahrstufe der Vielzahl an Fahrstufen und umgekehrt kann vorzugsweise ausschließlich durch Bewegung des Kippschalters in eine einzige erste Auslenkrichtung der möglichen Auslenkrichtung gewechselt werden. Die visuelle Einrichtung weist vorzugsweise wenigstens eine Anzeige auf, welche eingerichtet ist, um ein Symbol anzuzeigen, welches den Fahrer darauf hinweist, dass durch Bewegung des Kippschalters in die erste Auslenkrichtung die jeweils andere Fahrstufe gewählt werden kann. Vorzugsweise ist die Getriebesteuereinrichtung des Weiteren eingerichtet, die wenigstens eine Anzeige in der Weise zu steuern, dass das Symbol nur dann angezeigt wird, wenn die erste oder die zweite Fahrstufe angewählt ist.

Ein zweiter Aspekt der Erfindung betrifft ein Fahrzeug mit einem solchen Getriebesystem.

Ein dritter Aspekt der Erfindung betrifft ein Verfahren zum Betrieb eines solchen Getriebesystems, wobei das Symbol angezeigt wird, wenn die erste oder die zweite Fahrstufe angewählt ist.

Eine Fahrstufe im Sinne der Erfindung entspricht vorzugsweise einem Betriebsmodus des automatischen Schaltgetriebes. Die Fahrstufe ist dabei weiter vorzugsweise in der Getriebesteuereinrichtung definiert.

Eine visuelle Einrichtung im Sinne der Erfindung ist eingerichtet, ein Schaltschema des automatischen Schaltgetriebes grafisch darzustellen. Vorzugsweise ist das Schaltschema dabei unveränderlich auf einer Oberfläche im Bereich des monostabilen Kippschalters angebracht. Weiter vorzugsweise kann das Schaltschema aber auch auf der wenigstens einen Anzeige grafisch dargestellt werden und ist in diesem Fall insbesondere veränderlich.

Die Erfindung beruht auf dem Ansatz, dem Benutzer zum richtigen Zeitpunkt zu zeigen, in welchen Fahrstufen er durch sogenanntes Toggeln zu einer weiteren Fahrstufe wechseln kann bzw. zwischen welchen Fahrstufen er mittels Toggeln wechseln kann. Beim Toggeln wird zwischen wenigstens zwei Fahrstufen gewechselt, indem der monostabile Kippschalter immer in eine einzige Auslenkrichtung bewegt wird. In Fahrstufen, in welchen nicht getoggelt werden kann, wird dagegen kein entsprechendes Symbol angezeigt.

Durch die Erfindung wird eine einfache und intuitive Art der Bedienung eines Getriebesystems umgesetzt. Insbesondere kann der Benutzer durch prüfen, ob das Symbol angezeigt wird oder nicht, stets in Erfahrung bringen, ob er durch Toggeln anwählbare Fahrstufen erreichen kann bzw. ob Toggeln in dem jeweiligen Zeitpunkt möglich ist.

In einer vorteilhaften Ausgestaltung ist der monostabile Kippschalter längs einer Schaltgasse, welche durch das Schaltschema angegeben wird, in zwei entgegengesetzte Auslenkrichtungen bewegbar. Auch durch das Vorsehen einer Schaltgasse mit zwei entgegengesetzten Auslenkrichtungen des Kippschalters wird eine besonders intuitive Bedienung verwirklicht.

In einer weiteren vorteilhaften Ausgestaltung des Getriebesystems ist der Kippschalter in der Weise ausgebildet, dass dieser nicht mit der Hand umschlossen werden kann. Durch diese Maßnahme lassen sich monostabile Kippschalter realisieren, welche gegenüber einem klassischen Wählhebel wesentlich weniger Raum einnehmen und auch nicht in den Innenraum des Fahrzeugs hineinragen bzw. über eine Konsole des Fahrzeugs hervorragen.

In einer weiteren vorteilhaften Ausgestaltung des Getriebesystems weist der Kippschalter wenigstens eine Leiste und/oder eine Riffelung auf, welche sich wenigstens im Wesentlichen senkrecht zu der ersten Auslenkrichtung erstreckt oder erstrecken und mittels welcher der Benutzer den Kippschalter bedienen kann. Eine Leiste, welche vorzugsweise mit einer Riffelung versehen ist oder auch nur eine Riffelung auf einer ebenen Fläche stellen eine besondere platzsparende Variante eines monostabilen Kippschalters dar. Der Innenraum des Fahrzeugs wird auf diese Weise nicht beeinträchtigt.

In einer weiteren vorteilhaften Ausgestaltung des Getriebesystems ist das Symbol ein Pfeil oder Dreieck, dessen Spitze in die erste Auslenkrichtung deutet. Hierdurch wird dem Benutzer eindeutig dargestellt, in welche Richtung er den Kippschalter bewegen muss, um zwischen durch Toggeln erreichbare Fahrstufen hin und her zu schalten.

In einer weiteren vorteilhaften Ausgestaltung des Getriebesystems ist die Anzeige ein hinterleuchtbares Feld oder eine elektronische Anzeige. Im Falle des hinterleuchtbaren Felds erfolgt das Anzeigen des Symbols durch eine Aktivierung der Leuchtfunktion. Im Fall einer elektronischen Anzeige erfolgt das Anzeigen durch Erscheinen des Symbols auf der elektronischen Anzeige.

In einer weiteren vorteilhaften Ausgestaltung des Getriebesystems ist das Schaltschema ein Teil der Anzeige. Mithin wird das Schaltschema auf der Anzeige angezeigt.

In einer weiteren vorteilhaften Ausgestaltung des Getriebesystems ist das Schaltschema eine feststehende grafische Darstellung.

In einer weiteren vorteilhaften Ausgestaltung des Getriebesystems können mit dem Kippschalter wenigstens vier Fahrstufen, vorzugsweise fünf Fahrstufen, angewählt werden.

In einer weiteren vorteilhaften Ausgestaltung des Getriebesystems sind die erste und die zweite Fahrstufe die Fahrstufen Drive und Sport.

In Abhängigkeit des Antriebskonzepts des Fahrzeugs sind weitere Varianten möglich:
In einer weiteren vorteilhaften Ausgestaltung des Getriebesystems sind die erste und die zweite Fahrstufe die Fahrstufen Drive und Low Gear, zum Beispiel bei einem Fahrzeug mit Verbrennungsmotor ohne manuelle Schaltmöglichkeit.

In einer weiteren vorteilhaften Ausgestaltung des Getriebesystems sind die erste und die zweite Fahrstufe die Fahrstufen Drive und Bremsrekuperation, zum Beispiel bei einem Fahrzeug mit elektrischen Antrieb oder Zusatzantrieb.

Die jeweils beim Toggeln zur Auswahl stehenden Fahrstufen zeichnen sich vorzugsweise dadurch aus, dass relativ häufig zwischen diesen gewechselt wird.

In einer weiteren vorteilhaften Ausgestaltung des Getriebesystems sind die erste und die zweite Fahrstufe an einem Ende der Schaltgasse angeordnet. Insbesondere wenn die erste Auslenkrichtung, mittels welcher getoggelt wird, parallel zur Schaltgasse ist, eignet sich diese Anordnung der ersten und zweiten Fahrstufe besonders gut, um ein intuitives Schalten umzusetzen.

In einer weiteren vorteilhaften Ausgestaltung des Getriebesystems ist die erste Auslenkrichtung wenigstens im Wesentlichen senkrecht zur Schaltgasse ausgerichtet. Hierdurch kann gleich an mehreren Stellen der Schaltgasse vorzugsweise eine Toggelmöglichkeit vorgesehen sein. Darüber hinaus kann eine Toggelbewegung klar von einem Wählen einer anderen Fahrstufe der Schaltgasse abgegrenzt werden.

In einer weiteren vorteilhaften Ausgestaltung weist das Getriebesystem einen weiteren, durch den Benutzer betätigbaren Schalter auf, mittels welchem ein Betriebsmodus Parksperrfunktion aktiviert werden kann und welcher unabhängig von dem Kippschalter ist. Hierdurch kann die Fahrstufe Parksperrfunktion von den Fahrstufen der Schaltgasse getrennt werden.

In einer weiteren vorteilhaften Ausgestaltung des Getriebesystems ist die visuelle Einrichtung des Weiteren eingerichtet, um anzuzeigen, welche Fahrstufe angewählt ist, insbesondere mittels Feldern einer weiteren Anzeige, und wobei die Getriebesteuereinrichtung des Weiteren eingerichtet ist, um die visuelle Einrichtung in der Weise zu steuern, dass die jeweils angewählte Fahrstufe angezeigt wird. Hierdurch kann der Benutzer besonders einfach herausfinden, in welcher Fahrstufe das automatische Schaltgetriebe seines Fahrzeugs betrieben wird.

Die im Vorhergehenden genannten Merkmale und Vorteile in Bezug auf das Getriebesystem gemäß dem ersten Aspekt der Erfindung gelten entsprechend auch für die anderen Aspekte der Erfindung und umgekehrt.

In einer vorteilhaften Ausgestaltung des Fahrzeugs steht die Leiste etwa 3 cm, vorzugsweise etwa 2 cm, über eine Konsole des Fahrzeugs hervor.

In einer vorteilhaften Ausgestaltung des Verfahrens stellt diese Einrichtung das Schaltschema mit durch den Kippschalter anwählbaren Fahrstufen nur dann grafisch dar, wenn das Getriebesystem aktiviert ist.

Weitere Merkmale und Vorteile der Erfindung ergeben sich aus der nachfolgenden Beschreibung von Ausführungsbeispielen im Zusammenhang mit den Figuren. Diese zeigen wenigstens teilweise schematisch:
- **Fig. 1**: ein Ausführungsbeispiel eines Getriebesystems eines Fahrzeugs; und
- **Fig. 2**: ein Ausführungsbeispiel eines Fahrzeugs mit einem Getriebesystem.

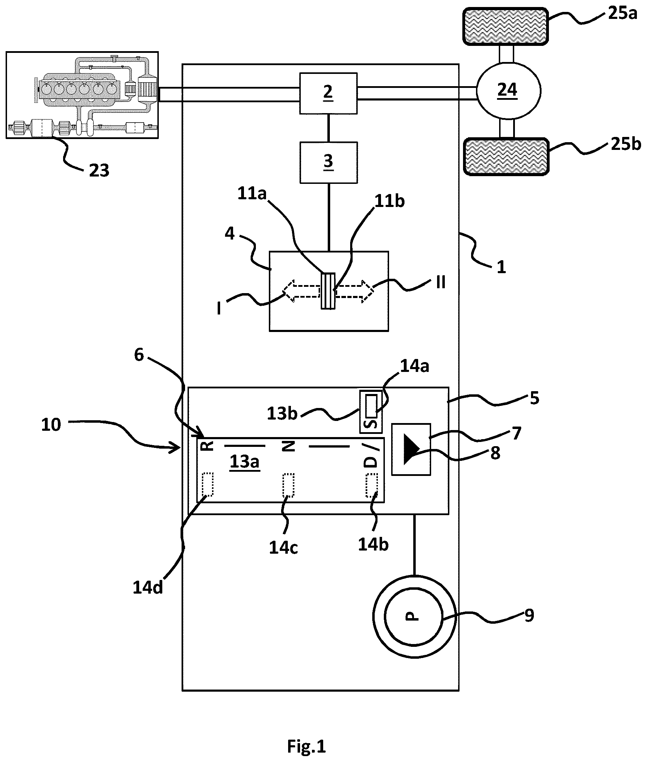

**Fig. 1** zeigt ein Ausführungsbeispiel des Getriebesystems 1, welches in einem Fahrzeug zwischen einem Motor 23 und dem Abtrieb angeordnet ist. Das Getriebe umfasst dabei vorzugsweise ein Differential 24 sowie zwei Räder 25a und 25b.

Das Getriebesystem 1 weist ein automatisches Schaltgetriebe 2 auf, wie es im Stand der Technik bekannt ist. Insbesondere können als automatische Schaltgetriebe Getriebe mit Drehmomentwandler oder auch Doppelkupplungsgetriebe zum Einsatz kommen.

Das automatische Schaltgetriebe 2 wird von einer Getriebesteuereinrichtung 3 gesteuert. Insbesondere werden mittels der Getriebesteuereinrichtung 3 der Schaltzeitpunkt sowie der einzulegende Gang, d. h. die gewünschte Übersetzung einer Motorausgangswelle und einer Abtriebswelle, festgelegt. Dies wird vorzugsweise auf der Grundlage von Kennfeldern durchgeführt, welche betriebspunktabhängig und anforderungsabhängig die zu verwirklichende Übersetzung bestimmen.

Hierbei kommen vorzugsweise Kennfelder zum Einsatz, welche in der Getriebesteuereinrichtung 3 bzw. einer Datenbank der Getriebesteuereinrichtung 3 hinterlegt sind.

Der Betriebsmodus des automatischen Schaltgetriebes 2 kann über die Getriebesteuereinrichtung 3 mittels eines monostabilen Kippschalters 4 ausgewählt werden.

Im dargestellten Ausführungsbeispiel weist der monostabile Kippschalter 3 zwei Auslenkrichtungen I, II in entgegengesetzte Richtung auf. Diese Auslenkrichtungen I, II sind in Fig. 1 jeweils mittels eines strichlierten Pfeils angedeutet.

Darüber hinaus könnte der monostabile Kippschalter 3 aber auch weitere Auslenkrichtungen (nicht dargestellt) aufweisen, welche sich beispielsweise wenigstens im Wesentlichen senkrecht zu den zwei dargestellten Auslenkrichtungen I, II erstrecken. Das eigentliche, von einem Benutzer bzw. Fahrer mit der Hand zu betätigende Schaltelement ist in dem dargestellten Ausführungsbeispiel eine Leiste 11a, welche vorzugsweise mit einer Riffelung 11b versehen ist. Diese Leiste 11a wird durch den Benutzer in die erste Auslenkrichtung I oder in die zweite Auslenkrichtung II bewegt.

Der monostabile Kippschalter 3 hat eine stabile Mittelstellung des Schaltelements bzw. der Leiste 11a.

Mittels des monostabilen Kippschalters 4 können vorzugsweise die Dauerbetriebsmodi des automatischen Schaltgetriebes 2 angewählt werden. Hierfür werden diese Dauerbetriebsmodi mittels des monostabilen Kippschalters 4 in der Getriebesteuereinrichtung 3 mittels sogenannter Fahrstufen eingestellt.

Vorzugsweise weist ein erfindungsgemäßes Getriebesystem 1 vier Dauerbetriebsmodi auf, welche durch die Fahrstufen Rückwärtsgang R, Leerlauf bzw. Neutral N und die Fahrstufe Drive D sowie die Fahrstufe Sport S angegeben werden. Weitere oder alternative mögliche Fahrstufen sind vorzugsweise, in Abhängigkeit der Antriebsart, die Fahrstufe Low Gear L oder die Fahrstufe Bremsrekuperation B. Bevorzugte Varianten sind dann R-N-D-S oder R-N-D-L oder R-N-D-B. Die vier Fahrstufen entsprechen den üblichen Fahrstufen eines automatischen Schaltgetriebes zum Anmeldezeitpunkt. Hinzu kommt im Allgemeinen ein weiterer Betriebsmodus des automatischen Schaltgetriebes für Parken P.

Die Fahrstufen R, N, D, S, welche die Dauerbetriebsmodi des automatischen Schaltgetriebes 2 angeben, bilden ein Schaltschema 6. Die Fahrstufen R, N, D, S bzw. das Schaltschema 6 sind/ist vorzugsweise als feststehende grafische Darstellung einer visuellen Einrichtung im räumlichen Bereich des monostabilen Kippschalters 4 angeordnet. Vorzugsweise bilden die Fahrstufen R, N, D, S dabei eine sogenannte Schaltgasse 10.

Die Auslenkrichtungen I, II des Kippschalters 4 sind hierbei vorzugsweise parallel zu der Schaltgasse 10 ausgerichtet. Auf diese Weise ist dem Benutzer bzw. Fahrer intuitiv klar, in welche Richtung er das Schaltelement 11a des monostabilen Kippschalters 4 bewegen muss, um von einer aktuell angewählten Fahrstufe zu einer anderen Fahrstufe in der Schaltgasse 10 zu gelangen.

Die Darstellung der Fahrstufen R, N, D, S ist vorzugsweise ein Teil einer visuellen Einrichtung 5. Weiter vorzugsweise weist diese visuelle Einrichtung 5 eine erste Anzeige 7 sowie eine zweite Anzeige 13a, 13b auf. Eine oder alle dieser Anzeigen 7, 13a, 13b können als digitale Anzeige, insbesondere als sogenanntes LCD-Display, oder auch als Anzeige mit hinterleuchtbaren Feldern ausgeführt sein.

In den Anzeigen 13a, 13 können auch die Symbole, insbesondere die Buchstaben P, R, N, D, S selber auch durch einen Farbgebung, insbesondere mittels zweier deutlich unterschiedlicher Farben selbst als Anzeigen dienen können.

Die Anzeigefläche 13a am besten auch auf die Buchstaben R-N-D ausweiten.

Die Anzeigefläche 13b auch auf den Buchstaben S ausweiten.

Vorzugsweise sind die visuelle Einrichtung 5 und der monostabile Kippschalter 4 im Bereich der Mittelkonsole eines Fahrzeugs angeordnet.

In der ersten Anzeige 7 kann vorzugsweise ein Symbol eines Pfeils oder auch mehrere Symbole angezeigt werden, welche eine Umschaltrichtung, d. h. eine Auslenkrichtung des Kippschalters 4 angibt oder angeben. Darüber hinaus kann mittels des Symbols angezeigt werden, dass zwischen der ersten Fahrstufe D und einer zweiten Fahrstufe S hin und her geschaltet werden kann. Üblicherweise wird ein solches Hin- und Herschalten Toggeln genannt. Weiter vorzugsweise kann zwischen mehr als zwei Fahrstufen getoggelt werden.

Mittels der zweiten Anzeige 13a, 13b kann vorzugsweise angezeigt werden, welche Fahrstufe R, N, D, S der Schaltgasse 10 bzw. des Schaltschemas 6 momentan angewählt ist. Vorzugsweise weist die zweite Anzeige 13a, 13b hierzu Felder 14a, 14b, 14c, 14d, insbesondere hinterleuchtbare Felder, auf. Diese Felder 14a, 14b, 14c, 14d sind immer dann beleuchtet sichtbar, wenn die entsprechende Fahrstufe angewählt ist. In der Darstellung der Fig. 1 ist die Fahrstufe Sport S angewählt, so dass das Feld 14a angezeigt wird. Die Felder 14b, 14c, 14d für die anderen Fahrstufen R, N, D sind entsprechend nur gestrichelt angedeutet. Alternativ oder zusätzlich könnte auch das Symbol, insbesondere der Buchstabe selber, insbesondere andersfarbig, leuchte, um die angewählte Fahrstufe sichtbar zu machen.

Wird zwischen den Fahrstufen D, S getoggelt, so wird das Symbol 8 dauerhaft angezeigt, während die Felder 14a, 14b je nach eingelegter Fahrstufe D, S angezeigt werden.

Zum Anwählen des Betriebsmodus P ist vorzugsweise ein weiterer, durch den Benutzer betätigbarer zweiter Schalter 9 vorgesehen.

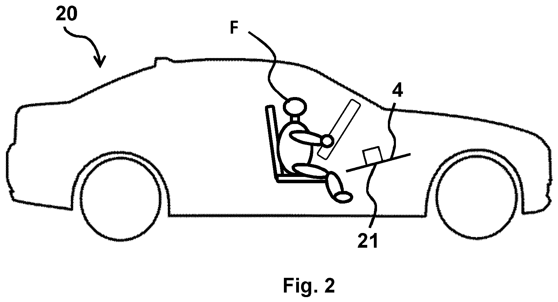

**Fig. 2** zeigt ein Ausführungsbeispiel eines Fahrzeugs 20, in welchem ein Getriebesystem 1 nach Fig. 1 verbaut ist.

Wie in Fig. 2 dargestellt, ist der monostabile Kippschalter 4 vorzugsweise im Bereich einer Mittelkonsole 21 des Fahrzeugs angeordnet. Auf diese Weise kann der Fahrer F diesen gut erreichen.

Es wird darauf hingewiesen, dass es sich bei den Ausführungsbeispielen lediglich um Beispiele handelt, die den Schutzbereich, die Anwendung und den Aufbau in keiner Weise einschränken sollen. Vielmehr wird dem Fachmann durch die vorausgehende Beschreibung ein Leitfaden für die Umsetzung mindestens eines Ausführungsbeispiels gegeben, wobei diverse Änderungen, insbesondere im Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 1: Getriebesystem
- 2: Schaltgetriebe
- 3: Getriebesteuereinrichtung
- 4: Monostabiler Kippschalter
- 5: Visuelle Einrichtung
- 6: Schaltschema
- 7: Anzeige
- 8: Symbol
- 9: Weiterer Schalter
- 10: Schaltgasse
- 11a: Leiste
- 11b: Riffelung
- 13a, 13b: Weitere Anzeige
- 20: Fahrzeug
- 21: Mittelkonsole
- 23: Motor
- 24: Differential
- 25a, 25b: Räder
- R: Fahrstufe Rückwärtsgang
- N: Fahrstufe Neutral
- D: Fahrstufe Drive
- S: Fahrstufe Sport
- M: Fahrstufe Manuell
- L: Fahrstufe Low Gear
- B: Fahrstufe Bremsrekuperation
- F: Fahrer/Benutzer

## Patentansprüche

1. Getriebesystem (1) für ein Fahrzeug, aufweisend:
ein automatisches Schaltgetriebe (2);
eine Getriebesteuereinrichtung (3), eingerichtet, um das automatische Schaltgetriebe zu steuern;
einen durch einen Benutzer (F), insbesondere Fahrer, betätigbaren monostabilen Kippschalter (4), welcher in wenigstens, insbesondere genau, zwei Auslenkrichtungen (I, II) bewegbar ist und mittels welchem eine Vielzahl an Fahrstufen (R, N, D, S) der Getriebesteuereinrichtung (3) durch den Benutzer (F) anwählbar sind; und
eine visuelle Einrichtung (5), welche ein Schaltschema (6) mit durch den Kippschalter (4) anwählbaren Fahrstufen (R, N, D, S) graphisch darstellt oder darstellen kann;
wobei zwischen einer ersten und einer zweiten Fahrstufe (D, S) der Vielzahl an Fahrstufen (R, N, D, S) und umgekehrt ausschließlich durch Bewegung des Kippschalters (4) in eine einzige erste Auslenkrichtung (I; II) der möglichen Auslenkrichtungen (I, II) gewechselt werden kann,
**dadurch gekennzeichnet, dass** die visuelle Einrichtung (5) wenigstens eine Anzeige (7) aufweist, eingerichtet, um ein Symbol (8) anzuzeigen, welches die erste Auslenkrichtung (I; II) angibt, durch welche die jeweils andere Fahrstufe (D; S) angewählt werden kann, und
wobei die Getriebesteuereinrichtung (3) des Weiteren eingerichtet ist, die wenigstens eine Anzeige (7) in der Weise zu steuern, dass das Symbol (8) nur dann angezeigt wird, wenn die erste oder die zweite Fahrstufe (D; S) angewählt ist.

2. Getriebesystem (1) nach Anspruch 1, wobei der Kippschalter (4) wenigstens eine Leiste (11a) und/oder eine Riffelung (11b) aufweist, welche sich wenigstens im Wesentlichen senkrecht zu der ersten Auslenkrichtung (I; II) erstreckt oder erstrecken und mittels welcher der Benutzer (F) den Kippschalter (4) bedienen kann.

3. Getriebesystem nach einem der vorhergehenden Ansprüche, wobei das Symbol ein Pfeil oder Dreieck ist, dessen Spitze in die erste Auslenkrichtung deutet.

4. Getriebesystem (1) nach einem der vorhergehenden Ansprüche, wobei die erste und die zweite Fahrstufe (D, S) an einer der beiden Endstellungen einer Schaltgasse (10) angeordnet sind.

5. Getriebesystem (1) nach Anspruch 4, wobei die erste Auslenkrichtung (I; II) wenigstens im Wesentlichen senkrecht zur Schaltgasse (10) ausgerichtet ist.

6. Getriebesystem (1) nach einem der vorhergehenden Ansprüche, wobei die visuelle Einrichtung (5) des Weiteren eingerichtet ist, um anzuzeigen, welche Fahrstufe (R, N, D, S) angewählt ist, insbesondere mittels Feldern (13a, 13b, 13c, 13d) einer weiteren Anzeige (13a, 13b), und wobei die Getriebesteuereinrichtung (3) des Weiteren eingerichtet ist, um die visuelle Einrichtung (5) in der Weise zu steuern, dass die jeweils angewählte Fahrstufe (R, N, D, S) angezeigt wird.

7. Fahrzeug (20) mit einem Getriebesystem (1) nach einem der vorhergehenden Ansprüche.

8. Fahrzeug (20) nach Anspruch 7, wobei das Getriebesystem nach einem der Anspruch 3 bis 7 ausgebildet ist und wobei die Leiste maximal etwa 3 cm, vorzugsweise etwa 2 cm, über eine Konsole (21) des Fahrzeugs (20) hervorsteht.

9. Verfahren zum Betrieb eines Getriebesystems (1) nach einem der Ansprüche 1 bis 6, wobei das Symbol (8) nur dann angezeigt wird, wenn die erste oder die zweite Fahrstufe (D, S) angewählt ist.

10. Verfahren nach Anspruch 9, wobei die visuelle Einrichtung (5) das Schaltschema (6) mit durch den Kippschalter (4) anwählbaren Fahrstufen nur dann graphisch darstellt, wenn das Getriebesystem (1) aktiviert ist.

## Claims

1. Gearbox system (1) for a vehicle, having:
an automatic gearbox (2);
a gearbox control device (3) set up to control the automatic gearbox;
a monostable toggle switch (4) which can be actuated by a user (F), in particular a driver, which can be moved in at least, in particular exactly, two deflection directions (I, II) and by means of which a large number of driving modes (R, N, D, S) of the gearbox control device (3) can be selected by the user (F); and
a visual device (5), which graphically displays or can display a shift pattern (6) having driving modes (R, N, D, S) that can be selected by the toggle switch (4);
wherein a change can be made between a first and a second driving mode (D, S) of the large number of driving modes (R, N, D, S) and vice versa only by moving the toggle switch (4) in a single first deflection direction (I; II) of the possible deflection directions (I, II),
**characterized in that** the visual device (5) has at least one display (7) that is set up to display a symbol (8) which indicates the first deflection direction (I; II) by means of which the respective other driving mode (D; S) can be selected, and
wherein the gearbox control device (3) is further set up to control the at least one display (7) in such a way that the symbol (8) is displayed only when the first or
the second driving mode (D; S) is selected.

2. Gearbox system (1) according to Claim 1, wherein the toggle switch (4) has at least one bar (11a) and/or corrugations (11b), which extend/s at least substantially at right angles to the first deflection direction (I; II) and by means of which the user (F) can operate the toggle switch (4).

3. Gearbox system according to one of the preceding claims, wherein the symbol is an arrow or triangle, the tip of which points in the first deflection direction.

4. Gearbox system (1) according to one of the preceding claims, wherein the first and the second driving mode (D, S) are arranged at one of the two end positions of a shift gate (10).

5. Gearbox system (1) according to Claim 4, wherein the first deflection direction (I; II) is aligned at least substantially at right angles to the shift gate (10).

6. Gearbox system (1) according to one of the preceding claims, wherein the visual device (5) is further set up to display which driving mode (R, N, D, S) is selected, in particular by means of fields (13a, 13b, 13c, 13d) of a further display (13a, 13b), and wherein the gearbox control device (3) is further set up to control the visual device (5) in such a way that the respectively selected driving mode (R, N, D, S) is displayed.

7. Vehicle (20) having a gearbox system (1) according to one of the preceding claims.

8. Vehicle (20) according to Claim 7, wherein the gearbox system is designed according to one of Claims 3 to 7, and wherein the bar projects by at most about 3 cm, preferably about 2 cm, over a console (21) of the vehicle (20) .

9. Method for operating a gearbox system (1) according to one of Claims 1 to 6, wherein the symbol (8) is displayed only when the first or the second driving mode (D, S) is selected.

10. Method according to Claim 9, wherein the visual device (5) graphically illustrates the shift pattern (6) having driving modes that can be selected via the toggle switch (4) only when the gearbox system (1) is activated.

## Revendications

1. Système de transmission (1) pour un véhicule, comprenant :
une boîte de vitesses automatique (2) ;
un dispositif de commande de transmission (3), conçu pour commander la boîte de vitesses automatique ;
un commutateur à bascule (4) monostable actionnable par un utilisateur (F), notamment conducteur, lequel peut être déplacé dans au moins, notamment exactement, deux directions de déviation (I, II) et au moyen duquel une pluralité de rapports de conduite (R, N, D, S) du dispositif de commande de transmission (3) peuvent être sélectionnés par l'utilisateur (F) ; et
un dispositif visuel (5), lequel représente ou peut représenter graphiquement un schéma de changement de rapport (6) avec les rapports de conduite (R, N, D, S) sélectionnables par le commutateur à bascule (4) ;
le changement entre un premier et un deuxième rapport de conduite (D, S) de la pluralité de rapports de conduite (R, N, D, S) et inversement pouvant être effectué exclusivement par un mouvement du commutateur à bascule (4) dans une unique première direction de déviation (I ; II) des directions de déviation (I, II) possibles, **caractérisé en ce que** le dispositif visuel (5) possède au moins un afficheur (7), conçu pour afficher un symbole (8) qui indique la première direction de déviation (I ; II) par laquelle peut être sélectionné l'autre rapport de conduite (D ; S) respectif, et
le dispositif de commande de transmission (3) étant en outre conçu pour commander l'au moins un afficheur (7) de manière à ce que le symbole (8) ne soit affiché que lorsque le premier ou le deuxième rapport de conduite (D ; S) est sélectionné.

2. Système de transmission (1) selon la revendication 1, le commutateur à bascule (4) possédant au moins une baguette (11a) et/ou une cannelure (11b), qui s'étend ou s'étendent au moins sensiblement perpendiculairement à la première direction de déviation (I ; II) et au moyen de laquelle ou desquelles l'utilisateur (F) peut opérer le commutateur à bascule (4).

3. Système de transmission selon l'une des revendications précédentes, le symbole étant une flèche ou un triangle dont la pointe indique la première direction de déviation.

4. Système de transmission (1) selon l'une des revendications précédentes, le premier ou le deuxième rapport de conduite (D, S) étant disposés à l'une des deux positions finales d'un couloir de changement de rapport (10).

5. Système de transmission (1) selon la revendication 4, la première direction de déviation (I ; II) étant disposée sensiblement perpendiculairement au couloir de changement de rapport (10).

6. Système de transmission (1) selon l'une des revendications précédentes, le dispositif visuel (5) étant en outre conçu pour indiquer quel rapport de conduite (R, N, D, S) est sélectionné, notamment au moyen de champs (13a, 13b, 13c, 13d) d'un afficheur supplémentaire (13a, 13b), et le dispositif de commande de transmission (3) étant en outre conçu pour commander le dispositif visuel (5) de manière à ce que le rapport de conduite (R, N, D, S) respectivement sélectionné soit affiché.

7. Véhicule (20) comprenant un système de transmission (1) selon l'une des revendications précédentes.

8. Véhicule (20) selon la revendication 7, le système de transmission étant configuré selon l'une des revendications 3 à 7 et la baguette faisant saillie au maximum d'environ 3 cm, de préférence d'environ 2 cm, au-dessus d'une console (21) du véhicule (20).

9. Procédé pour faire fonctionner un système de transmission (1) selon l'une des revendications 1 à 6, le symbole (8) n'étant affiché que lorsque le premier ou le deuxième rapport de conduite (D, S) est sélectionné.

10. Procédé selon la revendication 9, le dispositif visuel (5) ne représentant graphiquement schéma de changement de rapport (6) avec les rapports de conduite sélectionnables par le commutateur à bascule (4) que lorsque le système de transmission (1) est activé.
